# EUROPÄISCHE PATENTSCHRIFT

(11) **EP 0 749 659 B1**
(45) Veröffentlichungstag und Bekanntmachung des Hinweises auf die Patenterteilung: **23.09.1998**
(21) Anmeldenummer: 95913016.2
(22) Anmeldetag: 10.03.1995
(51) Int. Cl.: H04N 1/00

(54) **VERFAHREN UND GERÄT ZUR ELEKTRONISCHEN ARCHIVIERUNG DER VON EINEM RECHNER AUFBEREITETEN DOKUMENTE**
PROCESS AND APPARATUS FOR ELECTRONICALLY FILING COMPUTER-PROCESSED DOCUMENTS
PROCEDE ET DISPOSITIF D'ARCHIVAGE ELECTRONIQUE DES DOCUMENTS TRAITES PAR UN ORDINATEUR

(30) Priorität: 11.03.1994 DE 4408327
(43) Veröffentlichungstag der Anmeldung: 27.12.1996
(73) Patentinhaber: Océ Printing Systems GmbH, 85586 Poing (DE)
(72) Erfinder: ZÜFLE, Joachim, D-13503 Berlin (DE)
(74) Vertreter: Schaumburg, Thoenes & Thurn
(86) Internationale Anmeldenummer: DE9500336
(87) Internationale Veröffentlichungsnummer: WO9524794

(56) Entgegenhaltungen:
- WO-A-94/05113
- DE-A- 4 307 577
- US-A- 5 008 926

## Beschreibung

Die Erfindung betrifft ein Verfahren und ein Gerät zur elektronischen Archivierung der von einem Rechner aufbereiteten Dokumente.

Die übliche Art der Archivierung der von einem Rechner aufbereiteten Dokumente besteht darin, daß das als Rechnerausdruck vorliegende Dokument mit einem optischen Scanner abgetastet und das so erhaltene und in elektrische Bildsignale umgesetzte Abbild in einem Archiv abgespeichert wird, das zum Beispiel Magnetbänder, magnetische oder optische Speicherplatten als Aufzeichnungsträger verwendet. Zusätzlich können mit einem optischen Zeichenleser auch die im Dokument enthaltenen Textinformationen sowie Barcodes extrahiert werden. Die Bildsignale und die extrahierten Informationen werden dann zu einem Datensatz zusammengefaßt und dem Archivspeicher zugeführt - man siehe z.B. US-Patentschrift 5.054.096 entspricht der WO-A- 94/05113.

Die Erfindung bezweckt demgegenüber die unmittelbare Archivierung der von einem Rechner aufbereiteten Dokumente ohne den Umweg über einen Rechnerausdruck auf Papier.

Das dies ermöglichende Verfahren bzw. Gerät ergibt sich aus den kennzeichnenden Merkmalen des Patentanspruches 1 bzw der Patentansprüche 7 und 8.

Die Erfindung nutzt dabei die Tatsache, daß mit einem Rechner erstellte und bearbeitete Dokumente für den Ausdruck durch einen Drucker bereits vom Rechner selbst in entsprechender Weise aufbereitet werden, bevor sie in Form eines Druckdatenstromes zusammen mit den üblichen Steueranweisungen über eine Druckeranschlußschnittstelle an den Drucker übergeben werden, der dann die Druckdaten durch Rasterung in einen Pixel-Datenstrom für die Steuerung der Belichtungseinheit des Druckers umsetzt. In ähnlicher Weise nutzt die Erfindung einen solchen Druckeranschluß nun zur direkten Archivierung der Dokumente, wobei der vom Rechner gelieferte Druckdatenstrom einerseits in bekannter Weise gerastert und dadurch in einen Pixel-Datenstrom umgewandelt wird und wobei zum anderen im Druckdatenstrom enthaltene Textinformationen und Barcodes als Indexdaten automatisch herausgefiltert und neutralisiert in einen zum Pixel-Datenstrom parallelen Index-Datenstrom umgesetzt werden. Beide Datenströme werden dann, zu einem Datensatz als logische Einheit zusammengefaßt, in bekannter Weise an einen Datenträger zum Archivieren weitergeleitet.

Gesonderte Einrichtungen für die Übernahme der Druckdaten vom Rechner und für das Umsetzen in einen Pixel-Datenstrom können umgangen werden, wenn gemäß Patentanspruch 2 die zur Archivierung eines Dokumentes benötigten Druck- und Pixeldaten von entsprechenden Anschlüssen der Druckersteuerung eines an den die Druckdaten liefernden Rechner angeschlossenen Druckers geliefert werden. Dabei ist es gemäß Patentanspruch 3 zweckmäßig, verschiedene Betriebsarten vorzusehen, denen zufolge eine Archivierung allein ohne gleichzeitigen Ausdruck oder aber ein Ausdruck mit oder ohne gleichzeitiger Archivierung möglich ist.

Weiterhin ist es vorteilhaft, wenn der Pixel-Datenstrom vor der Weiterleitung an den archivierenden Datenträger nach einem bekannten Komprimierungsalgorithmus komprimiert wird und wenn sowohl der komprimierte Pixel-Datenstrom als auch der gebildete Index-Datenstrom vor ihrer Weiterleitung zwischengespeichert werden.

Die Index- und Pixeldaten von mehrseitigen Dokumenten werden dabei zweckmäßig jeweils seitenweise bearbeitet und archiviert.

Beim Aufbau entsprechend arbeitender Geräte, welcher sich aus den kennzeichnenden Merkmalen des Patentanspruches 7 bzw. 8 ergibt, handelt es sich im einen Falle (Patentanspruch 7) um ein eigenstandiges Gerät als unmittelbares Bindeglied zwischen der Druckeranschlußschnittstelle eines Rechners und dem Anschluß eines Datenträgers für das Archivieren mit den für die Durchführung des Verfahrens gemäß der Erfindung benötigten Einrichtungen.

Im anderen Falle (Patentanspruch 8) handelt es sich um ein kombiniertes Gerät aus einem Drucker und einem Zusatzgerät, wobei das Zusatzgerät lediglich die Einrichtungen enthält, die für die von der Druckersteuerung nicht ausgeführten Funktionen des Verfahrens gemäß der Erfindung benötigt werden.

Weiterbildungen der Geräte gemäß der Erfindung ergeben sich aus den abhängigen Patentansprüchen.

Einzelheiten der Erfindung seien nachfolgend anhand von in der Zeichnung als Blockschaltbild dargestellten Ausführungsbeispielen näher erläutert.Im einzelnen zeigen
- FIG 1: ein einteiliges Gerät gemäß der Erfindung und
- FIG 2: ein aus Drucker und Zusatzgerät bestehendes Gerät gemäß der Erfindung.

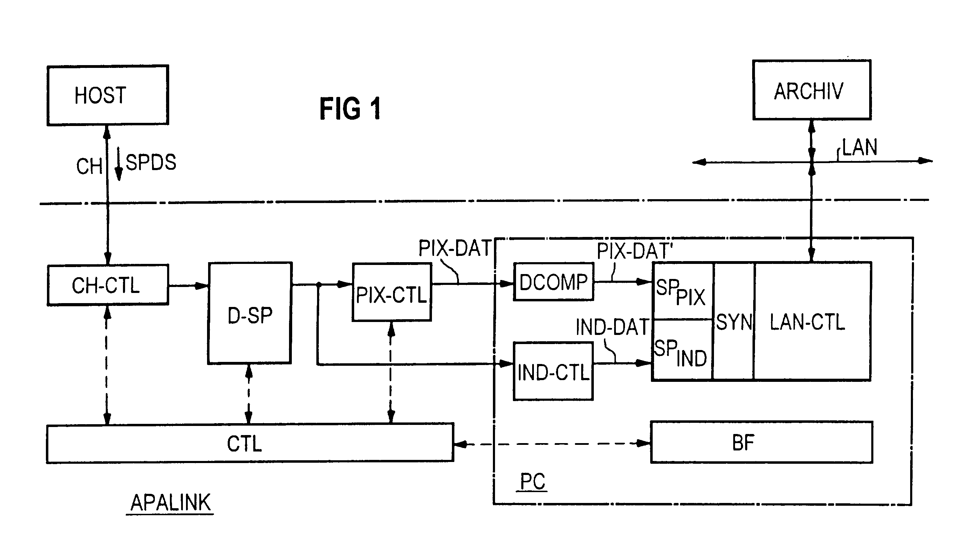

FIG 1 zeigt im linken oberen Teil einen Rechner HOST und im rechten oberen Teil ein Archivsystem ARCHIV, das in beliebiger Weise ausgebildet sein kann. Beide Einrichtungen sind über entsprechende Anschlüsse, die als Kanal CH bzw. als Leitungssystem LAN ausgebildet sein können, mit dem neuen Gerät APALINK verbunden, das aus der Sicht des Rechners wie ein Drucker und aus der Sicht des Archivsystems wie ein Scanner arbeitet,so daß vom Rechner HOST aufbereitete und gespeicherte Dokumente ohne den Umweg über einen Papierausdruck unmittelbar an das Archivsystem ARCHIV übergeben werden können.

Der vom Rechner HOST aufbereitete und beispielsweise über einen Anschlußkanal CH als Druckeranschlußschnittstelle gelieferte Druckdatenstrom SPDS kann in beliebiger bekannter Weise gebildet sein, beispielsweise entsprechend den Anweisungen in der Siemens Nixdorf Druckschrift U 9737-J-Z247-2, "Siemens Nixdorf Printer Data Stream" vom Juni 1993. Dieser Druckdatenstrom wird in bekannter Weise einer Anschlußsteuerung CH-CTL zugeleitet, die die Steuerbefehle auswertet und die eigentlichen Druckdaten einem Zwischenspeicher D-SP zuleitet.

Mit diesem Zwischenspeicher D-SP ist einerseits die Steuereinrichtung PIX-CTL gekoppelt, die in bekannter Weise die einzelnen Druckdaten interpretiert und durch Rasterung einen entsprechenden Pixel-Datenstrom PIX-DAT erzeugt. Dieser Pixel-Datenstrom wird dann nach einem der bekannten Algorithmen durch die Steuereinheit DCOMP komprimiert und im Speicherteil SP_{PIX} zur Weiterleitung vorübergehend gespeichert.

Parallel dazu werden die Druckdaten aus dem Zwischenspeicher D-SP über eine gesonderte Anschlußschnittstelle der Steuereinheit IND-CTL zugeleitet, die die Textinformationen und Barcodes als Indexdaten ausfiltert und dadurch neutralisiert, daß zum Beispiel alle zusätzliche Angaben über Schriftart, Schriftgröße usw. unterdrückt werden. Der sich daraus ergebende Index-Datenstrom IND-DAT wird dann parallel zum zugehörigen komprimierten Pixel-Datenstrom PIX-DAT' in einem weiteren Speicherteil SP_{IND} zur Weiterleitung vorübergehend gespeichert.

Um die sich jeweils auf dieselbe Dokumentenseite beziehenden getrennten Datenströme PIX-DAT' und IND-DAT auch als logische Einheit identifizieren zu können, werden sie durch die Einrichtung SYN mit einander entsprechenden Indentifikationszeichen versehen, d.h. logisch synchronisiert, bevor sie nacheinander an die Sendesteuerschaltung LAN-CTL des zum Archivsystem ARCHIV führenden Leitungssystems LAN weitergeleitet werden. Dieses Leitungssystem kann in beliebiger Weise, z.B. als "local area network" oder auch als direkter Anschluß zu einem als Archiv dienenden Datenträger, ausgebildet sein.

Wie im rechten Teil der Figur durch die strichpunktierte Umrandung angedeutet ist, kann für einen Teil der Funktionseinheiten beispielsweise ein herkömmlicher Personalcomputer PC verwendet werden, der mit Anschlüssen für die Übernahme des Pixel-Datenstromes PIX-DAT und des Druckdatenstromes für die Bildung des Index-Datenstromes IND-DAT durch die Steuereinheit IND-CTL ausgerüstet ist und der anstelle des bei einem Drucker vorhandenen Bedienfeldes für die Steuereinheit CTL zur Steuerung der übrigen Funktionseinheiten CH-CTL, D-SP und PIX-CTL die notwendigen Bedienfeldfunktionen BF durch entsprechende Funktionen an der Benutzeroberfläche in Verbindung mit einem weiteren Rechneranschluß für die Steuereinheit CTL nachbildet.

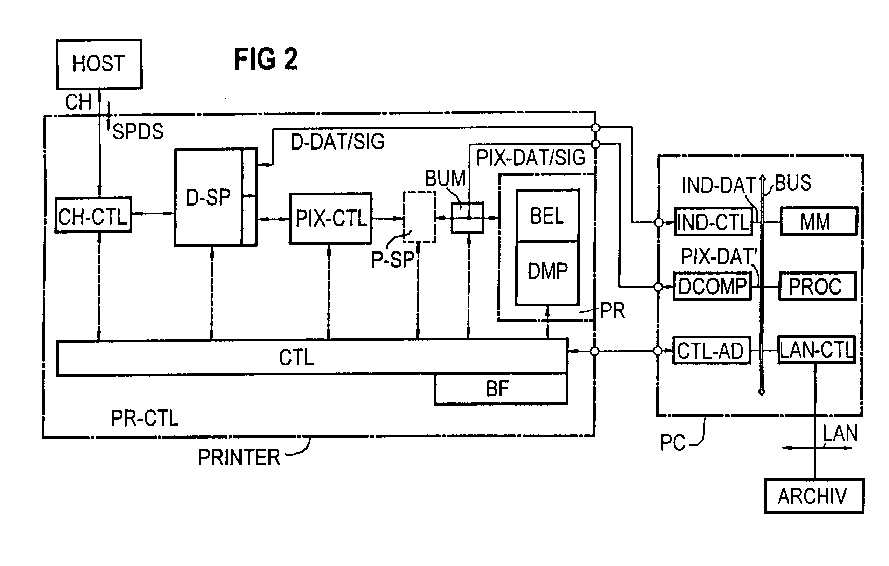

Bei dem in FIG 2 gezeigten Gerät wird ein Drucker PRINTER in Verbindung mit einem Zusatzgerät PC zur direkten Archivierung verwendet, wobei gleichartige Funktionseinheiten mit den gleichen Bezeichnungen wie in FIG 1 versehen sind. Es sind dies in der Druckersteuerung PR-CTL die Anschluß- oder Schnittstellensteuerung CH-CTL für den Anschlußkanal CH des die Druckdaten DPDS liefernden Rechners HOST, der nachfolgende Speicher D-SP für die Druckdaten und die anschließende Steuereinrichtung PIX-CTL zur Erzeugung der Pixeldaten, die gegebenenfalls auf dem Weg zum eigentlichen Druckerteil PR mit Belichtungseinheit BEL und Druckermechanik samt Papiersteuerung DMP in einem zwischengeschalteten Speicher P-SP zwischengespeichert werder können. Alle Funktionseinheiten von Druckersteuerung PR-CTL und Druckerteil PR unterliegen dabei der gemeinsamen Ablaufsteuerung CTL mit dem Bedienfeld BF.

Der Aufbau des dargestellten Druckers PRINTER, ist allgemein bekannt und nicht Gegenstand der Erfindung. Er wird lediglich für die direkte Archivierung mit ausgenutzt, indem durch ihn die für die Archivierung benötigten Druck- und Pixeldaten zur Verfügung gestellt werden. Demzufolge bestehen zwei getrennte Daten- und Signalverbindungen zum Zusatzgerät PC sowie eine Signalverbindung zur Abstimmung zwischen der Ablaufsteuerung CTL des Druckers PRINTER und der Steuerung des Zusatzgerätes.

Das Zusatzgerät PC kann in gleicher Weise wie der strichpunktiert umrandete Teil von FIG 1 ausgebildet sein. Im vorliegenden Fall ist eine Ausbildung als Personalcomputer gewählt, wobei die Steuerung durch den Prozessor PROC in Verbindung mit der Benutzeroberfläche des Personalcomputers erfolgt.

Die Druckdaten für die Bildung des Index-Datenstromes IND-DAT werden wiederum an einer gesonderten Anschlußschnittstelle des Speichers D-SP abgegriffen und zur Steuereinheit IND-CTL geleitet, während die Pixeldaten PIX-DAT an der AnschlußSchnittstelle zur Belichtungseinheit BEL abgegriffen und der Steuereinheit DCOMP zugeleitet werden. Zusätzlich ist die Ablaufsteuerung CTL des Druckers PRINTER über einem Steueradapter CTL-AD mit der Steuerung des Zusatzgerätes verbunden.

Alle Steuereinheiten IND-CTL, DCOMP und CTL-AD sind dabei als steckbare Schnittstellenkarten zum Anschluß an den Systembus BUS des Rechners PC ausgebildet. Jedoch können alle drei Steuereinheiten auch auf einer einzigen Steckkarte zusammengefaßt sein. Ebenso bestehen die Verbindungen zum Drucker PRINTER zweckmäßig aus Leitungen mit Steckverbindern an beiden Enden.

Anstelle des in FIG 2 gezeigten eigenständigen Zusatzgerätes PC kann dieses auch als gesonderte Baugruppe in den Drucker PRINTER integriert sein.

Abweichend vom Gerät gemäß FIG i ist im vorliegenden Fall für die übertragung der Pixeldaten an das Zusatzgerät PC das gleiche Protokoll vorzusehen, wie für die Ubertragung zur Belichtungseinheit BEL, und die alleinige Steuerung durch das Zusatzgerät PC ist nur möglich, wenn nicht gleichzeitig ein Ausdruck durch den Drucker PRINTER erfolgt. Erfolgt dagegen ein Ausdruck, dann geht die Steuerung vom Bedienfeld des Druckers PRINTER aus, und maßgebend für die Steuerung der Übertragung der Pixeldaten ist die Belichtungseinheit BEL, unabhängig davon, ob gleichzeitig archiviert wird oder nicht. Daraus ergeben sich drei verschiedene Betriebsarten mit Auswirkung auf die Anschlußschnittstelle für die Weiterleitung der Pixeldaten zum Zusatzgerät PC, die dementsprechend durch die Einrichtung BUM steuerbar ist.

Bezüglich der Übertragung der Druckdaten D-DAT zum Zusatzgerät PC kann dagegen das Protokoll frei gewählt werden, ebenso für den Signalaustausch zwischen der Ablaufsteuerung CTL des Druckers PRINTER und des Steueradapters CTL-AD am Zusatzgerät PC.

Wird der Drucker PRINTER nur als solcher betrieben, dann wird durch die Einrichtung BUM der Anschluß zum Zusatzgerät einfach abgeschaltet. Soll dagegen gleichzeitig archiviert werden, so sind die Abruftakte durch die Einrichtung DCOMP unwirksam zu schalten. Wird dagegen nur archiviert, dann wird dagegen die Anschlußschnittstelle für das Zusatzgerät PC in vollem Umfange wirksam.

Soll archiviert werden, schaltet die Steuerung des Zusatzgerätes PC entweder als originäre Steuerung oder aber bei gleichzeitigem Ausdruck, durch die Ablaufsteuerung CTL des Druckers PRINTER über die Signalverbindung zum Steueradapter CTL-AD angestoßen, die Einrichtungen IND-CTL und DCOMP wirksam, und sobald von der Druckersteuerung PR-CTL das Vorliegen von Pixeldaten gemeldet wird, werden diese von der Einrichtung DCOMP oder der Belichtungseinheit BEL gesteuert abgerufen und verarbeitet, wobei die Einheit DCOMP als Komprimierer arbeitet und einen komprimierten Pixel-Datenstrom PIX-DAT' liefert. Parallel dazu werden die zugehörigen Druckdaten im Speicher D-SP von der Einrichtung IND-CTL abgerufen und der Index-Datenstrom IND-DAT erzeugt. Beide Datenströme werden dann im Arbeitsspeicher MM als Zwischenspeicher bis zur Weiterleitung über die Sendesteuerschaltung LAN-CTL an das zum Archivsystem führende Leitungssystems LAN gespeichert. Die logische Synchronisation erfolgt dabei softwaregesteuert durch die Steuerung des Personalcomputers PC.

## Patentansprüche

1. Verfahren zur elektronischen Archivierung der von einem Rechner aufbereiteten Dokumente,
dadurch gekennzeichnet,
- daß die über eine Druckeranschlußschnittstelle (CH) des Rechners (HOST) in Form von codierten Steueranweisungen abrufbaren Druckdaten (SPDS) in einen zur Ansteuerung der Belichtungseinheit eines Druckers geeigneten Pixel-Datenstrom (PIX-DAT) umgesetzt werden,
- daß aus den in einen Pixel-Datenstrom umzusetzenden Druckdaten (SPDS) außerdem Textinformationen und Barcodes als Indexdaten ausgefiltert und neutralisiert in einen Index-Datenstrom (IND-DAT) umgesetzt werden und
- daß beide Datenströme (PIX-DAT, IND-DAT) mit die Zusammengehörigkeit von Teilen beider Datenströme anzeigenden Kennungen einem Datenträger (ARCHIV) zur Archivierung zugeleitet werden.

2. Verfahren nach Anspruch 1,
**dadurch gekennzeichnet,**
daß die zur Archivierung eines Dokumentes benötigten Druck- und Pixeldaten (SPDS,PIX-DAT) von entsprechenden Anschlüssen der Druckersteuerung (PR-CTL) eines an den die Druckdaten liefernden Rechner (HOST) angeschlossenen Druckers (PRINTER) geliefert werden.

3. Verfahren nach Anspruch 2,
**dadurch gekennzeichnet,**
daß verschiedene Betriebsarten wählbar sind und daß abhängig von der jeweils gewählten Betriebsart eine Archivierung von Dokumenten parallel zum oder ohne gleichzeitigen Ausdruck durch den Druckerteil (PR) des Druckers oder aber nur ein Ausdruck ohne gleichzeitige Archivierung möglich ist, wobei die Steuerung bei alleiniger Archivierung von einem Zusatzgerät (PC) aus und beim Ausdruck vom Drucker (PRINTER) aus erfolgt.

4. Verfahren nach einem der Ansprüche 1 bis 3,
**dadurch gekennzeichnet,**
daß der Pixel-Datenstrom (PIX-DAT) vor der Weiterleitung zum archivierenden Datenträger (ARCHIV) komprimiert wird.

5. Verfahren nach Anspruch 4,
**dadurch gekennzeichnet,**
daß der komprimierte Pixel-Datenstrom (PIX-DAT') und der Index-Datenstrom (IND-DAT) vor der Weiterleitung zwischengespeichert werden.

6. Verfahren nach einem der Ansprüche 1 bis 5,
**dadurch gekennzeichnet,**
daß jeweils die Druckdaten (SPDS) einer Dokumentenseite umgesetzt und die daraus resultierenden Datenströme (PIX-DAT/IND-DAT) seitenweise dem archivierenden Datenträger (ARCHIV) zugeleitet werden.

7. Gerät zur Steuerung der elektronischen Archivierung der von einem Rechner (HOST) aufbereiteten Dokumente,
**dadurch gekennzeichnet,**
daß es eingangsseitig wie ein Drucker an eine Druckeranschlußschnittstelle (CH) des die Druckdaten (SPDS) für die Dokumente liefernden Rechners (HOST) und ausgangsseitig an einen archivierenden Datenträger (ARCHIV) anschließbar ist und daß es
- Einrichtungen(CH-CTL) zum Abrufen und zur Entgegennahme der Druckdaten (SPDS) aus dem Rechner (HOST),
- Einrichtungen (PIX-CTL) zum Umsetzen der Druckdaten (SPDS) in einen Pixel-Datenstrom (PIX-DAT),
- Einrichtungen (IND-CTL) zum Ausfiltern und Neutralisieren der in den Druckdaten (SPDS) enthaltenen Textinformationen und Barcodes als Indexdaten in Form eines Index-Datenstromes (IND-DAT) und
- Einrichtungen (SYN/LAN-CTL) zur Weiterleitung beider Datenströme (PIX-DAT, IND-DAT) mit die Zusammengehörigkeit von Teilen beider Datenströme anzeigenden Kennungen an den Datenträger (ARCHIV)
aufweist.

8. Gerät zur Steuerung der elektronischen Archivierung der von einem Rechner aufbereiteten Dokumente,
**dadurch gekennzeichnet,**
daß es aus einem an den Rechner (HOST) angeschlossenen Drukker (PRINTER) und aus einem mit dessen Druckersteuerung (PR-CTL) gekoppelten Zusatzsteuergerät (PC) als Bindeglied zum archivierenden Datenträger (ARCHIV) besteht, und daß das Zusatzgerät (PC)
- Einrichtungen (CTL-AD) zum Austausch von Steuersignalen mit der Druckersteuerung (PR-CTL)
- Einrichtungen (DCOMP) zur Steuerung der Übernahme des Pixeldatenstromes (PIX-DAT) von der Druckersteuerung (PR-CTL)
- Einrichtungen (IND-CTL) zur Steuerung der Übernahme der Druckdaten (SPDS) von der Druckersteuerung (PR-CTL) sowie zum Ausfiltern und Neutralisieren der in den Druckdaten enthaltenen Textinformationen und Barcodes als Indexdaten mit Bildung eines entsprechenden Index-Datenstromes (IND-DAT) und
- Einrichtungen (LAN-CTL) zur Weiterleitung beider Datenströme (PIX-DAT',IND-DAT) mit die Zusammengehörigkeit von Teilen beider Datenströme anzeigenden Kennungen an den Datenträger (ARCHIV)
aufweist.

9. Gerät nach Anspruch 8,
**dadurch gekennzeichnet,**
daß das Zusatzgerät (PC) integraler Bestandteil des Druckers (PRINTER) ist.

10. Gerät nach Anspruch 8 oder 9,
**dadurch gekennzeichnet,**
daß die den Pixel-Datenstrom (PIX-DAT) für die Belichtungseinheit (BEL) des Druckers (PRINTER) liefernde Schnittstelle als einer der Anschlüsse für das Zusatzgerät (PC) dient und daß der Anschluß entsprechend der jeweils gewählten Betriebsart (nur Druck, Druck und Archivierung, nur Archivierung) steuerbar ist.

11. Gerät nach einem der Ansprüche 7 bis 10,
**dadurch gekennzeichnet,**
daß es Einrichtungen (SP_{PIX},SP_{IND} bzw. MM) zur Zwischenspeicherung der gebildeten beiden Datenströme (PIX'-DAT,IND-DAT) vor der Weiterleitung an den archivierenden Datenträger (ARCHIV) aufweist.

12. Geräten nach Anspruch 11,
**dadurch gekennzeichnet,**
daß es Einrichtungen (DCOMP) zum Komprimieren des Pixel-Datenstromes (PIX-DAT) vor der Zwischenspeicherung aufweist.

13. Gerät nach einem der Ansprüche 7 bis 12,
**dadurch gekennzeichnet,**
daß die Einrichtungen (IND-CTL,DCOMP,CTL-AD) zur Bildung des Index-Datentstromes, zum Komprimieren der Pixeldaten und zum Austausch der Steuersignale als steckbare Schnittstellenkarten zum Anschluß an den Systembus (BUS) eines PCs ausgebildet sind, der den Archivierungsvorgang steuert und dessen Arbeitsspeicher (MM) zur Zwischenspeicherung der Datenströme (PIX-DAT',IND-DAT) dient.

## Claims

1. A method for electronically filing documents prepared by a computer, characterized
- in that the printing data (SPDS), which can be retrieved by the computer (HOST) via a printer connection interface (CH), are converted into a pixel data stream (PIX-DAT) suitable for driving the exposure unit of a printer,
- in that in addition, text information and bar codes are filtered out as index data from the printing data (SPDS) to be converted into a pixel data stream, and are neutralized and converted into an index data stream (IND-DAT), and
- in that the two data streams (PIX-DAT, IND-DAT) are fed with identification keys indicating the corresponding parts of the two data streams to a data carrier (ARCHIV) for filing.

2. Method as claimed in claim 1, characterized in that the printing and pixel data (SPDS,PIX-DAT) required for filing a document are supplied by appropriate terminals of the printer controller (PR-CTL) of a printer (PRINTER) connected to the computer (HOST) supplying the printing data.

3. Method as claimed in claim 2, characterized in that different operating modes are selectable, and in that, depending on the respectively selected operating mode, filing of documents is possible in parallel with, or without simultaneous printing out by the printer part (PR) of the printer, or else only printing out without simultaneous filing is possible, the control being performed from an ancillary device (PC) in the case of filing alone, and from the printer (PRINTER) in the case of printing out.

4. The method as claimed in one of claims 1 to 3, characterized in that the pixel data stream (PIX-DAT) is compressed before being relayed to the filing data carrier (ARCHIV).

5. The method as claimed in claim 4, characterized in that the compressed pixel data stream (PIX-DAT') and the index data stream (IND-DAT) are buffered before being relayed.

6. The method as claimed in one of claims 1 to 5, characterized in that in each case the printing data (SPDS) of one document side are converted and the data streams (PIX-DAT/IND-DAT) resulting therefrom are fed in a pagewise fashion to the filing data carrier (ARCHIV).

7. An apparatus for controlling the electronic filing of the documents prepared by a computer (HOST) characterized in that it can be connected to the input side like a printer to a printer connection interface (CH) of the computer (HOST) supplying the printing data (SPDS) for the documents, and on the output side to a filing data carrier (ARCHIV), and in that it has
- devices (CH-CTL) for retrieving and for accepting the printing data (SPDS) from the computer (HOST),
- devices (PIX-CTL) for converting the printing data (SPDS) into a pixel data stream (PIX-DAT),
- devices (IND-CTL) for filtering out and neutralizing the text information and bar codes, contained in the printing data (SPDS), as index data in the form of an index data stream (IND-DAT), and
- devices (SYN/LAN-CTL) for relaying the two data streams (PIX-DAT, IND-DAT) with identification keys indicating the corresponding parts of the two data streams to the data carrier (ARCHIV).

8. Apparatus for controlling the electronic filing of the documents prepared by a computer, characterized in that it comprises a printer (PRINTER) connected to the computer (HOST), and an ancillary device (PC), coupled to the printer controller (PR-CTL) of said printer as a link to the filing data carrier (ARCHIV), and in that the ancillary device (PC) has
- devices (CTL-AD) for exchanging control signals with the printer controller (PR-CTL),
- devices (DCOMP) for controlling the acceptance of the pixel data stream (PIX-DAT) from the printer controller (PR-CTL),
- devices (IND-CTL) for controlling the acceptance of the printing data (SPDS) from the printer controller (PR-CTL) as well as for filtering out and neutralizing the text information and bar codes, contained in the printing data, as index data, with the formation of a corresponding index data stream (IND-DAT), and
- devices (LAN-CTL) for relaying the two data streams (PIX-DAT', IND-DAT) with identification keys indicating the corresponding parts of the two data streams to the data carrier (ARCHIV).

9. The apparatus as claimed in claim 8, characterized in that the ancillary device (PC) is an integral component of the printer (PRINTER).

10. The device as claimed in claim 8 or 9, characterized in that the interface which supplies the pixel data stream (PIX-DAT) for the exposure unit (BEL) of the printer (PRINTER) serves as one of the connections for the ancillary device (PC), and in that the connection can be controlled in accordance with the respectively selected operating mode (only printing, printing and filing, only filing).

11. The apparatus as claimed in one of claims 7 to 10, characterized in that it has devices (SP_{PIX},SP_{IND} and MM) for buffering the two data streams (PIX'-DAT,IND-DAT) formed before the relaying to the filing data carrier (ARCHIV).

12. The apparatus as claimed in claim 11, characterized in that it has devices (DCOMP) for compressing the pixel data stream (PIX-DAT) before the buffering.

13. The apparatus as claimed in one of claims 7 to 12, characterized in that the devices (IND-CTL,DCOMP,CTL-AD) for forming the index data stream, for compressing the pixel data and for exchanging the control signals are designed as pluggable interface cards for connection to the system bus (BUS) of a PC which controls the filing operation and whose main memory (MM) serves the purpose of buffering the data streams (PIX-DAT',IND-DAT).

## Revendications

1. Procédé d'archivage électronique de documents traités par un ordinateur, caractérisé en ce que
- les données à imprimer (SPDS), pouvant être appelées sous forme d'instructions de commande codées par l'intermédiaire d'une interface de connexion d'une imprimante (CH) de l'ordinateur (HOST), sont converties en un courant de données à pixels (PIX-DAT) approprié pour le réglage de l'unité d'exposition d'une imprimante,
- depuis les données à imprimer (SPDS) devant être converties en un courant de données à pixels, en outre des informations de texte et des codes à barres sous forme de données à index filtrées et neutralisées, sont convertis en un courant de données à index (IND-DAT),
- les deux courants de données (PIX-DAT, IND-DAT) sont transmis à un support de données (ARCHIV) pour archivage, pourvus de repères indiquant des éléments communs aux deux courants de données.

2. Procédé selon la revendication 1, caractérisé en ce que les données d'impression et de pixels (SPDS, PIX-DAT) nécessaires pour l'archivage d'un document sont fournies par des connexions appropriées de la commande d'imprimante (PR-CTL) d'une imprimante (PRINTER) raccordée à un ordinateur (HOST) fournissant les données à imprimer.

3. Procédé selon la revendication 2, caractérisé en ce que l'on peut choisir différents modes de fonctionnement, et qu'un archivage de documents, en fonction du mode de fonctionnement respectivement choisi, est possible parallèlement ou sans impression simultanée par la partie d'impression (PR) de l'imprimante, ou alors une impression sans archivage simultané, la commande pour un archivage seul étant assurée depuis un appareil complémentaire (PC) et, pour l'impression, depuis l'imprimante (PRINTER).

4. Procédé selon l'une des revendications 1 à 3, caractérisé en ce que le courant de données à pixels (PIX-DAT) est comprimé avant transmission au support de données (ARCHIV) d'archivage.

5. Procédé selon la revendication 4, caractérisé en ce que le courant de données à pixels (PIX-DAT') comprimé et le courant de données à index (IND-DAT) sont temporairement mémorisés avant leur transmission.

6. Procédé selon l'une des revendications 1 à 5, caractérisé en ce que respectivement les données à imprimer (SPDS) d'une page de document sont converties et que les courants de données (PIX-DAT / IND-DAT) en résultant sont transmis page par page au support de données (ARCHIV) d'archivage.

7. Appareil pour la commande de l'archivage électronique de documents traités par un ordinateur (HOST), caractérisé en ce que ledit appareil peut être raccordé côté entrée comme une imprimante à une interface de connexion d'imprimante (CH) de l'ordinateur (HOST) fournissant les données à imprimer (SPDS) pour les documents, et côté sortie à un support de données (ARCHIV) d'archivage, et en ce qu'il comporte :
- des dispositifs (CH-CTL) pour appeler et recevoir les données à imprimer (SPDS) de l'ordinateur (HOST),
- des dispositifs (PIX-CTL) pour convertir les données à imprimer (SPDS) en un courant de données à pixels (PIX-DAT),
- des dispositifs (IND-CTL) pour filtrer et neutraliser les informations de texte et les codes à barres contenus dans les données à imprimer (SPDS) comme données à index sous la forme d'un courant de données à index (IND-DAT) et
- des dispositifs (SYN/LAN-CTL) pour la transmission au support de données (ARCHIV) des deux courants de données (PIX-DAT, IND-DAT) pourvus de repères indiquant des éléments communs aux deux courants de données.

8. Appareil pour la commande de l'archivage électronique de documents traités par un ordinateur, caractérisé en ce qu'il comprend une imprimante (PRINTER) raccordée à l'ordinateur (HOST) et un appareil de commande supplémentaire (PC) couplé à la commande d'imprimante (PR-CTL) et servant d'élément de liaison avec le support de données (ARCHIV) d'archivage, et en ce que l'appareil supplémentaire (PC) comporte:
- des dispositifs (CTL-AD) pour l'échange de signaux de commande avec la commande d'imprimante (PR-CTL),
- des dispositifs (DCOMP) pour la commande de la réception du courant de données à pixels (PIX-DAT) depuis la commande d'imprimante (PR-CTL),
- des dispositifs (IND-CTL) pour la commande de la réception des données à imprimer (SPDS) depuis la commande d'imprimante (PR-CTL), et pour le filtrage et la neutralisation des informations de texte et des codes à barres contenus dans les données à imprimer comme données à index avec constitution d'un courant correspondant de données à index (IND-DAT), et
- des dispositifs (LAN-CTL) pour la transmission au support de données (ARCHIV) des deux courants de données (PIX-DAT', IND-DAT) pourvus de repères indiquant des éléments communs aux deux courants de données.

9. Appareil selon la revendication 8, caractérisé en ce que l'appareil supplémentaire (PC) fait partie intégrante de l'imprimante (PRINTER).

10. Appareil selon la revendication 8 ou 9, caractérisé en ce que l'interface fournissant le courant de données à pixels (PIX-DAT) à l'unité d'exposition (BEL) de l'imprimante (PRINTER) constitue l'un des raccordements à l'appareil supplémentaire (PC), et en ce que le raccordement est commandable en fonction du mode de fonctionnement respectivement choisi (impression seule, impression et archivage, archivage seul).

11. Appareil selon l'une des revendications 7 à 10, caractérisé en ce qu'il comporte des dispositifs (SP_{pIX}, SP_{IND} ou MM) pour une mémorisation temporaire des deux courants de données constitués (PIX' -DAT, IND-DAT) avant leur transmission au support de données (ARCHIV) d'archivage.

12. Appareil selon la revendication 11, caractérisé en ce qu'il comporte des dispositifs (DCOMP) pour comprimer le courant de données à pixels (PIX-DAT) avant la mémorisation temporaire.

13. Appareil selon l'une des revendications 7 à 12, caractérisé en ce que les dispositifs (IND-CTL, DCOMP, CTL-AD) pour la constitution du courant de données à index , la compression des données à pixels et l'échange des signaux de commande sont réalisés sous la forme de cartes à interface enfichables pour le raccordement au bus système (BUS) d'un PC commandant la procédure d'archivage et dont la mémoire de travail (MM) sert à la mémorisation temporaire des courants de données (PIX-DAT', IND-DAT).
